# EUROPÄISCHE PATENTANMELDUNG

(11) **EP 1 659 154 A1**
(43) Veröffentlichungstag der Anmeldung: **24.05.2006**
(21) Anmeldenummer: 05024555.4
(22) Anmeldetag: 10.11.2005
(51) Int. Cl.: C08L 83/08, C08K 3/00, C08K 3/04, C08K 3/36

(54) **Vernetzbare Siliconmassen mit langer Verarbeitungszeit und Lagerstabilität**

(30) Priorität: 18.11.2004 DE 102004055690
(71) Anmelder: Wacker Chemie AG, 81737 München (DE)
(72) Erfinder: Wörner, Christof, Dr., 84489 Burghausen (DE)
(74) Vertreter: Renner, Thomas

(57) **Zusammenfassung**

Die Erfindung betrifft vernetzbare Siliconmassen mit langer Verarbeitungszeit und langer Lagerstabilität, ihre Anwendung, ein Verfahren zu ihrer Herstellung, die daraus hergestellten Siliconelastomere mit guter Lösungsmittelbeständigkeit und hervorragenden mechanischen Eigenschaften, ein Verfahren zu deren Herstellung sowie deren Anwendung.

## Beschreibung

Die Erfindung betrifft vernetzbare Siliconmassen mit langer Verarbeitungszeit und langer Lagerstabilität, ihre Anwendung, ein Verfahren zu ihrer Herstellung, die daraus hergestellten Siliconelastomere mit guter Lösungsmittelbeständigkeit und hervorragenden mechanischen Eigenschaften, ein Verfahren zu deren Herstellung sowie deren Anwendung.

Die Anforderungen an additionsvernetzende Siliconmassen und die daraus erhaltenen Siliconkautschuke steigen zunehmend in Bezug auf ihre Lagerfähigkeit und deren Verarbeitbarkeit im Spritzguss. Die Forderungen zielen dabei auf eine Verbesserung des Verhaltens bezüglich der Entformung, bessere Teilequalität sowie die Zykluszeit im Vergleich zum Stand der Technik. Gleichzeitig bestehen die Anforderungen an die aus diesen additionsvernetzbaren Siliconmassen hergestellten Siliconkautschuke darin, dass diese gute Medienbeständigkeit sowie gute mechanische Eigenschaften aufweisen sollen.

Um die Lösungsmittelbeständigkeit von Siliconelastomeren gegenüber unpolaren Lösungsmitteln zu verbessern, werden im Stand der Technik polare Trifluorpropylsiloxy-Einheiten in das Polyorganosiloxan als Bestandteil der additionsvernetzbaren Siliconmassen eingebaut. Um die vollständige Vernetzung des Trifluorpropyl-Gruppen enthaltenden Polyorganosiloxans mit mindestens zwei aliphatischen Kohlenstoff-Kohlenstoff-Mehrfachbindungen zu gewährleisten, müssen SiH-Gruppen eines Vernetzers in ausreichender Menge vorhanden sein.

Außerdem darf die Reaktivität des SiH-Vernetzers nicht zu hoch sein, da ansonsten die Verarbeitungszeit, d.h. die Zeit in der die unvernetzte Siliconmasse nach Vermischen aller Komponenten noch ausreichend fließfähig und noch nicht vernetzt ist, zu kurz ist. Die Reaktivität des SiH-Vernetzers und der Überschuss an SiH- zu ungesättigten Gruppen darf aber auch nicht zu gering sein, da ansonsten die Vernetzungszeit zu lange wird und somit die Produktivität bei der Herstellung von Formteilen, beispielsweise im Spritzguss, zu gering ist.

Die Patentschriften US 4,029,629, US 4,529,752 und US 4,599,374 beschreiben beispielsweise additionsvernetzende Siliconmassen, die vinylterminierte Poly-(3,3,3-trifluorpropylmethyl)siloxane und SiH-Vernetzer enthalten. Die beschriebenen SiH-Vernetzer enthalten weiterhin H-SiRR'-O-Einheiten, entweder in harzartigen Strukturen oder am Kettenende von linearen Vernetzern. Diese Gruppen sind bezüglich Hydrosilylierung äußerst reaktiv und verursachen eine sehr schnelle Vernetzung der additionsvernetzenden Siliconmassen.

Die so erhaltenen Siliconmassen zeigen eine sehr kurze Topfzeit, so dass sich daraus auch sehr kurze Verarbeitungszeiten ergeben. Außerdem wird die Lagerstabilität der unvernetzten Massen beim Einsatz von SiH-Vernetzer mit H-SiRR'-O-Einheiten deutlich verschlechtert.

Der vorliegenden Erfindung lag daher die Aufgabe zugrunde, vollständig mittels Addition vernetzende Siliconmassen, die sich durch eine ausreichend lange Verarbeitungszeit bei Raumtemperatur nach Mischen aller Komponenten und einer schnellen und vollständigen Vernetzung bei höheren Temperaturen auszeichnen, zur Verfügung zu stellen. Weiterhin sollten die unvernetzten Siliconmassen eine hervorragende Lagerstabilität aufweisen. Die aus diesen Siliconmassen hergestellten Siliconelastomere sollten sich weiterhin durch eine gute Lösungsmittel-, Kraftstoff- bzw. Ölbeständigkeit sowie eine hervorragende Mechanik auszeichnen.

Die Aufgabe konnte nun überraschend dadurch gelöst werden, dass für die vollständige Vernetzung nicht nur ein Überschuss an SiH-Gruppen vorhanden, sondern auch die Verträglichkeit des SiH-Vernetzers mit dem aliphatischen Kohlenstoff-Kohlenstoff-Mehrfachbindungen und Trifluorpropyl-Gruppen enthaltenden Polyorganosiloxan durch Einbau von Trifluorpropyl-Gruppen in den SiH-Vernetzer erzielt wird. Außerdem wurde überraschend gefunden, dass diese Trifluorpropyl-Gruppen enthaltenden SiH-Vernetzer keine H-SiRR'-O-Einheiten enthalten dürfen, da ansonsten die Verarbeitungszeit bzw. die Topfzeit nicht ausreichend ist.

Gegenstand der Erfindung sind daher härtbare Siliconmassen enthaltend
(A) 100 Gewichtsteile zumindest eines Polyorganosiloxans mit einer Viskosität von 500 bis 2.000.000 mPas, das mindestens zwei Reste mit aliphatischen Kohlenstoff-Kohlenstoff-Mehrfachbindungen und mindestens 5 Mol-% 3,3,3-Trifluorpropylmethylsiloxy- oder mindestens 5 Mol-% Bis(3,3,3-Trifluorpropyl)siloxy-Einheiten aufweist,
(B) 0.1 bis 50 Gewichtsteile einer oder mehrerer siliciumorganischer Verbindungen, welche mindestens zwei, bevorzugt mindestens drei an Silicium gebundene Wasserstoffatome pro Molekül enthalten, mindestens 2,5 Mol-% 3,3,3-Trifluorpropylmethylsiloxy- oder mindestens 2,5 Mol-% Bis(3,3,3-Trifluorpropyl)siloxy-Einheiten aufweisen und keine H-SiRR'-O_{1/2}-Einheiten enthalten und zusätzlich das Verhältnis der an Silicium gebundenen Wasserstoffatome des Vernetzers (B) zur Kohlenstoff-Kohlenstoff-Mehrfachbindung der Polyorganosiloxane (A) mindestens 1,1 : 1 beträgt,
(C) 1 bis 90 Gewichtsteile verstärkender Füllstoff mit einer spezifischen Oberfläche von mindestens 50 m²/g und
(D) Hydrosilylierungskatalysator.

Die Zusammensetzung des Kohlenstoff-Kohlenstoff-Mehrfachbindungen enthaltenden Polyorganosiloxans (A) entspricht vorzugsweise der durchschnittlichen allgemeinen Formel (1)

**R**^{**1**}_{**x**}**R**^{**2**}_{**y**}**SiO**_{**(4-x-y)/2**} (1),

worin
- **R**^{**1**}: unabhängig von einander einwertige, gegebenenfalls halogen- oder cyanosubstituierte, gegebenenfalls über eine organische zweiwertige Gruppe an Silicium gebundene C₁-C₁₀- Kohlenwasserstoffreste, die aliphatische Kohlenstoff-Kohlenstoff-Mehrfachbindungen enthalten,
- **R**^{**2**}: unabhängig von einander einwertige, gegebenenfalls halogen- oder cyanosubstituierte, über SiC-gebundene C₁-C₁₀- Kohlenwasserstoffreste, die frei sind von aliphatischen Kohlenstoff-Kohlenstoff Mehrfachbindungen, mit der Maßgabe, dass mindestens 5 Mol-% 3,3,3-Trifluorpropylmethylsiloxy- oder mindestens 5 Mol-% Bis(3,3,3-Trifluorpropyl)siloxy-Einheiten im Polyorganosiloxan (A) enthalten sind,
- **x**: eine solche nichtnegative Zahl mit der Maßgabe, dass mindestens zwei Reste **R**^{**1**} in jedem Molekül vorhanden sind, und
- **y**: eine nicht negative Zahl mit der Maßgabe, dass die Summe **(x+y)** im Bereich von 1,8 bis 2,5 liegt,
bedeuten.

Die Alkenylgruppen **R**^{**1**} sind einer Anlagerungsreaktion mit einem SiH-funktionellen Vernetzungsmittel zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen **R**^{**1**} an Silicium der Polymerkette gebunden sein können, bestehen beispielsweise aus Oxyalkyleneinheiten, wie solche der durchschnittlichen allgemeinen Formel (2)

**-(O)**_{**m**}**[(CH**_{**2**}**)**_{**n**}**O]**_{**o**}**-** (2),

worin
- **m**: die Werte 0 oder 1, insbesondere 0,
- **n**: Werte von 1 bis 4, insbesondere 1 oder 2 und
- **o**: Werte von 1 bis 20, insbesondere von 1 bis 5
bedeuten.

Die bevorzugten Reste **R**^{**1**} können in jeder Position der Polymerkette, insbesondere an den endständigen Siliciumatomen, gebunden sein.

Beispiele für unsubstituierte Reste **R**^{**2**} sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie o-, m-, p-Tolylreste und Ethylphenylreste; Aralkylreste, wie der Benzylrest, der alpha- und der β-Phenylethylrest.

Beispiele für substituierte Kohlenwasserstoffreste als Reste **R**^{**2**} sind halogenierte Kohlenwasserstoffe, wie der Chlormethyl-, 3-Chlorpropyl-, 3-Brompropyl-, 3,3,3-Trifluorpropyl- und 5,5,5,4,4,3,3-Heptafluorpentylrest sowie der Chlorphenyl-, Dichlorphenyl- und Trifluortolylrest.

**R**^{**2**} weist vorzugsweise 1 bis 6 Kohlenstoffatome auf. Insbesondere bevorzugt sind der Methyl-, 3,3,3-Trifluorpropyl- und Phenylrest.

Die Polyorganosiloxane (A) weisen dabei bevorzugt eine Viskosität von 2.000 bis 1.000.000, besonders bevorzugt 5.000 bis 500.000 mPas auf. Weiterhin bevorzugt sind Polyorganosiloxane (A) aufweisend mindestens 8 Mol-% 3,3,3-Trifluorpropylmethylsiloxy- oder Bis(3,3,3-Trifluorpropyl)siloxy-Einheiten, besonders bevorzugt sind Polyorganosiloxane (A) aufweisend mindestens 10 Mol-% 3,3,3-Trifluorpropylmethylsiloxy- oder Bis(3,3,3-Trifluorpropyl)siloxy-Einheiten.

Bestandteil (A) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane (A) kann linear, cyclisch oder auch verzweigt sein. Der Gehalt an zu verzweigten Polyorganosiloxanen führenden tri- und/oder tetrafunktionellen Einheiten, ist typischerweise sehr gering, vorzugsweise höchstens 20 Mol-%, insbesondere höchstens 0,1 Mol-%.

Besonders bevorzugt ist die Verwendung Vinylgruppen enthaltender Polydimethylsiloxane, deren Moleküle der durchschnittlichen allgemeinen Formel (3)

**(ViMe**_{**2**}**SiO**_{**1/2**}**)**_{**2**}**(ViMeSiO**_{**2/2**}**)**_{**p**}**(Me**_{**2**}**SiO**_{**2/2**}**)**_{**q**}**(MeTPFSiO**_{**2/2**}**)**_{**r**} (3),

entsprechen, worin Vi die Vinylgruppe, Me die Methylgruppe und TPF die 3,3,3-Trifluorpropylgruppe sowie **p, q** und **r** nichtnegative ganze Zahlen mit der Maßgabe bedeuten, dass **p** ≥ 0, **r** ≥ 2, bevorzugt **r** ≥ 3, 50 < **(p+q+r)** < 3.000, bevorzugt 150 < **(p+q+r)** < 1.000, 0 < (**p**+1)/**(p+q+r)** < 0,2 und **r/(p+q+r) ≥** 0,05.

SiH-Vernetzer (B), der mindestens zwei, bevorzugt mindestens drei SiH-Funktionen pro Molekül enthaltende Organosiliciumverbindung aufweist, besitzt vorzugsweise eine Zusammensetzung der durchschnittlichen allgemeinen Formel (4)

**H**_{**a**}**R**^{**3**}_{**b**}**SiO**_{**(4-a-b)/2**} (4),

worin
- **R**^{**3**}: unabhängig von einander einwertige, gegebenenfalls halogen- oder cyanosubstituierte, über SiC-gebundene C₁-C₁₀₋Kohlenwasserstoffreste, die frei sind von aliphatischen Kohlenstoff-Kohlenstoff-Mehrfachbindungen, mit der Maßgabe, dass mindestens 2,5 Mol-% 3,3,3-Trifluorpropylmethylsiloxy- oder mindestens 2,5 Mol-% Bis(3,3,3-Trifluorpropyl)siloxy-Einheiten und keine endständigen Reste HR³₂SiO_{1/2}- enthalten sind, und
- **a, b**: nichtnegative ganze Zahlen sind,
bedeuten mit der Maßgabe, dass 0,5 < **(a+b)** < 3,0, 0 < **a** < 2 und dass mindestens zwei siliciumgebundene Wasserstoffatome pro Molekül vorhanden sind.

Beispiele für unsubstituierte Reste **R**^{**3**} sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Cycloalkylreste, wie Cyclopentyl-, Cyc-lohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie o-, m-, p-Tolylreste und Ethylphenylreste; Aralkylreste, wie der Benzylrest, der alpha- und der β-Phenylethylrest.

Beispiele für substituierte Kohlenwasserstoffreste als Reste **R**^{**3**} sind halogenierte Kohlenwasserstoffe, wie der Chlormethyl-, 3-Chlorpropyl-, 3-Brompropyl, 3,3,3-Trifluorpropyl und 5,5,5,4,4,3,3-Heptafluorpentylrest sowie der Chlorphenyl-, Dichlorphenyl- und Trifluortolylrest.

**R**^{**3**} weist vorzugsweise 1 bis 6 Kohlenstoffatome auf. Insbesondere bevorzugt sind Methyl, 3,3,3-Trifluorpropyl und Phenyl.

Die erfindungsgemäßen SiH-Vernetzer (B) sind frei von endständigen H-SiRR'-O_{1/2}-Einheiten (M^{H}-Einheiten; worin R und R' unabhängig von einander dieselbe Bedeutung wie R³ annehmen können).

Bevorzugt ist die Verwendung einer drei oder mehr SiH-Bindungen pro Molekül enthaltenden Organosiliciumverbindung.

Der Wasserstoffgehalt der Organosiliciumverbindung (B), welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.

Die Organosiliciumverbindung (B) enthält vorzugsweise mindestens drei und höchstens 600 Siliciumatome pro Molekül. Bevorzugt ist die Verwendung von Organosiliciumverbindung, die 4 bis 200 Siliciumatome pro Molekül enthält.

Die Struktur der Organosiliciumverbindung (B) kann linear, verzweigt, cyclisch oder netzwerkartig sein.

Besonders bevorzugte Organosiliciumverbindungen (B) sind lineare Polyorganosiloxane der durchschnittlichen allgemeinen Formel (5)

**(R**^{**4**}_{**3**}**SiO**_{**1/2**}**)**_{**d**}**(HR**^{**4**}**SiO**_{**2/2**}**)**_{**e**}**(R**^{**4**}_{**2**}**SiO**_{**2/2**}**)**_{**f**} (5),

worin
- **R**^{**4**}: die Bedeutungen von **R**^{**3**} hat und
- **d, e, f**: nichtnegativen ganzen Zahlen
bedeuten mit der Maßgabe, dass die Gleichungen **d** = 2, **e** > 2, 5 < **(e+f)** < 200 und 0,1 < **e/(e +f)** < 1 erfüllt sind.

Der SiH-funktionelle Vernetzer (B) ist vorzugsweise in einer solchen Menge in der vernetzbaren Siliconmasse enthalten, dass das Molverhältnis von SiH-Gruppen zu Kohlenstoff-Kohlenstoff-Mehrfachbindungen mindestens 1,1 : 1, bevorzugt 1,1 bis 5 : 1 insbesondere bevorzugt 1,1 bis 3 : 1 beträgt.

Bei dem verstärkenden Füllstoff (C) handelt es sich vorzugsweise um gefällte oder pyrogene Kieselsäuren, aber auch Ruß. Bevorzugt sind gefällte und pyrogene Kieselsäuren, sowie Gemische derselben. Besonders bevorzugt sind mit Silyliermittel oberflächenbehandelte pyrogene Kieselsäure. Die Hydrophobierung der Kieselsäure kann entweder vor der Einarbeitung in das Polyorganosiloxan erfolgen oder auch in Gegenwart eines Polyorganosiloxans nach dem in-situ Verfahren. Beide Verfahren können sowohl im Batch-Prozess als auch kontinuierlich durchgeführt werden. Als Silylier-Agenzien können alle dem Fachmann bekannten Hydrophobiermittel verwendet werden. Diese sind vorzugsweise Silazane, insbesondere Hexamethyldisilazan und/oder 1,3-Divinyl-1,1,3,3-tetramethyldisilazan, 1,3-Bis(3,3,3-trifluoropropyl)tetramethyldisilazan, und/oder Polysilazane, wobei auch zusätzlich Wasser eingesetzt werden kann. Zusätzlich können auch andere Silylier-Agenzien, wie beispielsweise SiOH-und/oder SiCl- und/oder Alkoxy-funktionelle Silane bzw. Siloxane als Hydrophobiermittel verwendet werden. Ebenso können zyklische, lineare oder verzeigte nicht-funktionelle Organosiloxane, wie beispielsweise Octamethylcyclotetrasiloxan oder Polydimethylsiloxan, jeweils für sich genommen oder zusätzlich zu Silazanen als Silylier-Agenzien eingesetzt werden. Um die Hydrophobierung zu beschleunigen, ist auch der Zusatz von katalytisch aktiven Additiven, wie beispielsweise Hydroxide, möglich. Die Hydrophobierung kann in einem Schritt unter Verwendung von einem oder mehreren Hydrophobiermitteln, aber auch unter Verwendung von einem oder mehreren Hydrophobiermitteln in mehreren Schritten erfolgen.

Bevorzugt sind gefällte oder pyrogene Kieselsäuren. Besonders bevorzugt ist eine Kieselsäure mit einer spezifischen Oberfläche nach BET von 80-400 m²/g, besonders bevorzugt 100-400 m²/g.

Als Hydrosilylierungskatalysator (D) können vorzugsweise alle bekannten Katalysatoren eingesetzt werden, welche die bei der Vernetzung von additionsvernetzenden Siliconmassen ablaufenden Hydrosilylierungsreaktionen katalysieren. Als Hydrosilylierungskatalysatoren können insbesondere Metalle und deren Verbindungen, wie Platin, Rhodium, Palladium, Ruthenium und Iridium, vorzugsweise Platin, eingesetzt werden. Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan. Ebenfalls sehr geeignet sind die in EP 1 077 226 A1 und EP 0 994 159 A1 beschriebenen Platinverbindungen, deren diesbezügliche Offenbarung auch Gegenstand dieser Anmeldung sein soll.

Der Hydrosilylierungskatalysator kann in jeder beliebigen Form eingesetzt werden, beispielsweise auch in Form von Hydrosilylierungskatalysator enthaltenden Mikrokapseln, oder Polyorganosiloxanpartikeln, wie beschrieben in EP 1 006 147 A1, deren diesbezügliche Offenbarung auch Gegenstand dieser Anmeldung sein soll.

Der Gehalt an Hydrosilylierungskatalysatoren wird so gewählt, dass die additionsvernetzbare Siliconmasse einen Pt-Gehalt von 0,1 bis 200 ppm, bevorzugt von 0,5 bis 40 ppm besitzt.

Die Siliconmassen können wahlweise als weiteren Bestandteil (E) mögliche Zusätze zu einem Anteil von bis zu 70 Gew.-%, vorzugsweise 0,0001 bis 40 Gew.-%, enthalten. Diese Zusätze können beispielsweise harzartige Polyorganosiloxane, die von den Polyorganosiloxanen (A) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Farbstoffe, Pigmente usw. Des Weiteren können als Bestandteil thixotropierende Bestandteile, wie hochdisperse Kieselsäure oder andere handelsübliche Thixotropieadditive enthalten sein.

Enthalten sein können des weiteren Zusätze, die der gezielten Einstellung der Verarbeitungszeit, Anspringtemperatur und Vernetzungsgeschwindigkeit der vernetzenden Massen dienen. Diese Inhibitoren und Stabilisatoren sind auf dem Gebiet der vernetzenden Massen sehr gut bekannt.

Zusätzlich können auch Additive hinzugefügt werden, wie beispielsweise die in EP 0 834 534 A1 beschriebenen Schwefelverbindungen, deren diesbezügliche Offenbarung auch Gegenstand dieser Anmeldung sein soll, die den Druckverformungsrest verbessern. Zusätzlich können auch Hohlkörper bzw. expandierbare Hohlkörper hinzugefügt werden. Zusätzlich können auch Treibmittel zur Erzeugung von Schäumen hinzugefügt werden.

Ein weiterer Gegenstand der vorliegenden Erfindung ist ein Verfahren zur Herstellung der erfindungsgemäßen härtbaren Siliconmassen, ein Verfahren zur Herstellung der vernetzten Siliconelastomere aus den erfindungsgemäßen härtbaren Siliconmassen sowie die so erhältlichen Siliconelastomere.

Die Herstellung oder Compoundierung der Siliconmassen erfolgt durch Mischen von Polyorganosiloxan (A) und Füllstoff (C). Die Vernetzung nach Zugabe von Vernetzer (B) und Hydrosilylierungskatalysator (D) erfolgt vorzugsweise durch Erwärmen, vorzugsweise bei 30 bis 250°C, bevorzugt bei mindestens 50°C, insbesondere bei mindestens 100°C, bevorzugt bei 150-200°C.

Die erfindungsgemäßen Massen eignen sich zur Herstellung von additionsvernetzenden RTV- und LSR-Massen, wobei vorzugsweise eine Komponente neben (A) und (C) den Hydrosilylierungskatalysator (D) und die zweite Komponente neben (A) und (C) den SiH-Vernetzer (B) enthält.

Ein weiterer Gegenstand der vorliegenden Erfindung ist die Verwendung der erfindungsgemäßen härtbaren Siliconmassen zur Herstellung von Formteilen aus den vernetzten Siliconelastomeren. Hierzu werden die Formteile vorzugsweise mittels Spritzguss aus den erfindungsgemäßen LSR-Massen hergestellt. Beispielsweise lassen sich so aus den erfindungsgemäßen härtbaren Siliconmassen Dichtungen erhalten, die sich insbesondere durch ihre hohe Kraftstoff- und Ölbeständigkeit auszeichnen.

Die nachfolgenden Beispiele beschreiben die prinzipielle Ausführbarkeit der vorliegenden Erfindung, ohne jedoch diese auf die darin offenbarten Inhalte zu beschränken.

### Beispiele:

### Beispiel 1 (nicht erfindungsgemäß):

In einem Kneter wurden 160 g eines vinyldimethylsiloxyterminierten Poly(3,3,3-trifluorpropylmethyl-co-dimethyl)siloxans mit einem Trifluorpropylmethylsiloxy-Anteil von 38 Mol-% mit einer Viskosität von 12.000 mPa*s (25°C) und einem Vinylgehalt von 0,053 mmol/g vorgelegt und mit 27 g Hexamethyldisilazan und 9,3 g Wasser gemischt, anschließend mit 100 g pyrogener Kieselsäure mit einer BET-Oberfläche von 300 m²/g vermischt, auf 100°C erwärmt und anschließend 1 Stunde geknetet. Danach wurden bei 150°C 2 Stunden flüchtige Bestandteile im Vakuum entfernt und anschließend mit 145 g vinyldimethylsiloxy-terminiertem Poly(3,3,3-trifluorpropylmethyl-co-dimethyl)siloxan mit einem Trifluorpropylmethylsiloxy-Anteil von 38 Mol-% mit einer Viskosität von 12.000 mPa*s (25°C) verdünnt.

Zu 100 g der oben hergestellten Masse wurden 2,1 g eines SiH-haltigen Harzes, bestehend aus Dimethylhydrogensiloxy- und SiO₂- Einheiten (M^{H}:Q = 1:0,7), mit einer Viskosität von 51 mPa*s bei 25°C und einem SiH-Gehalt von 0,86% hinzugefügt.

### Beispiel 2 (nicht erfindungsgemäß):

Im Unterschied zu Beispiel 1 wurden anstatt des SiH-haltigen Harz-Vernetzers 3,0 g eines linearen Dimethylhydrogensiloxyterminierten Mischpolymerisats, bestehend aus Dimethylsiloxy-, Methylhydrogensiloxy- und 15 Mol-% Trifluorpropylmethylsiloxy - Einheiten, mit einer Viskosität von 180 mPas bei 25°C und einem SiH-Gehalt von 0,60% hinzugefügt.

### Beispiel 3:

Im Unterschied zu Beispiel 1 wurden anstatt des SiH-haltigen Harz-Vernetzers 3,0 g eines linearen Trimethylsiloxy-terminierten Mischpolymerisats, bestehend aus Dimethylsiloxy-, Methylhydrogensiloxy- und 15 Mol-% Trifluorpropylmethylsiloxy - Einheiten, mit einer Viskosität von 170 mPas bei 25°C und einem SiH-Gehalt von 0,59% hinzugefügt.

### Beispiel 4 (nicht erfindungsgemäß):

Im Unterschied zu Beispiel 1 wurden anstatt des SiH-haltigen Harz-Vernetzers 3,0 g eines linearen Trimethylsiloxyterminierten Mischpolymerisats, bestehend aus Dimethylsiloxy-und Methylhydrogensiloxy-Einheiten, mit einer Viskosität von 100 mPas bei 25°C und einem SiH-Gehalt von 0,59% hinzugefügt.

Tabelle 1 zeigt den Einfluss des verwendeten SiH-Vernetzers auf die Lagerstabilität der unvernetzten Siliconmasse bei Raumtemperatur (25°C). In Tabelle 1 bedeuten dabei * nicht erfindungsgemäß, M^{H} eine HR₂SiO_{1/2}-Gruppe, Q eine SiO_{4/2}-Gruppe, D eine R₂SiO_{2/2}-Gruppe, D^{H} eine HRSiO_{2/2}-Gruppe, D^{TFP} eine R(TPF)SiO_{2/2}-Gruppe, worin TPF für den 3,3,3-Trifluorpropylrest steht, M eine R₃SiO_{2/2}-Gruppe sowie x, y und z nicht negative ganze Zahlen.

| **Beispiel** | **Struktur SiH-Vernetzer** | **Anfangsviskosität [Pa*s]** | **Viskosität nach 4 Wochen bei 25°C [Pa*s]** |
|---|---|---|---|
| 1 * | M^{H}ₓQ_{y} | 690 | 890 |
| 2 * | M^{H}DₓD^{H}_{y}D^{TFP}_{z}M^{H} | 730 | 820 |
| 3 | MDₓD^{H}_{y}D^{TFP}_{z}M | 710 | 720 |
| 4 * | MDₓD^{H}_{z}M | 740 | 760 |

Aus Tabelle 1 ist ersichtlich, dass die Verwendung eines SiH-Vernetzers, der keine MH-Einheiten enthält, eine erhebliche Verbesserung der Lagerstabilität der unvernetzten Siliconmasse zur Folge hat.

### Beispiel 5 (nicht erfindungsgemäß):

In einem Kneter wurden 160 g eines vinyldimethylsiloxyterminierten Poly(3,3,3-trifluorpropylmethyl-co-dimethyl)siloxans mit einem Trifluorpropylmethylsiloxy-Anteil von 38 Mol-% mit einer Viskosität von 12.000 mPa*s (25°C) und einem Vinylgehalt von 0,053 mmol/g vorgelegt und mit 27 g Hexamethyldisilazan und 9,3 g Wasser gemischt, anschließend mit 100 g pyrogener Kieselsäure mit einer BET-Oberfläche von 300 m²/g vermischt, auf 100°C erwärmt und anschließend 1 Stunde geknetet. Danach wurden bei 150°C 2 Stunden flüchtige Bestandteile im Vakuum entfernt und anschließend mit 150 g vinyldimethylsiloxy-terminierten Poly(3,3,3-trifluorpropylmethyl-co-dimethyl)siloxans mit einem Trifluorpropylmethylsiloxy-Anteil von 38 Mol-% mit einer Viskosität von 12.000 mPa*s (25°C) verdünnt.

Zu 100 g der oben hergestellten Masse wurden 0,16 g einer Lösung mit einem Pt-Gehalt von 1 Gew.-%, die einen Platin-sym-Divinyltetramethyldisiloxan-Komplex enthält, hinzugefügt.

Durch Vermischen von 100 g dieser Platin-haltigen Masse mit 100 g der in Beispiel 1 hergestellten Vernetzer-haltigen Masse und Zusatz von 0,14 g Ethinylcyclohexanol wurde eine additionsvernetzende Masse erhalten.

### Beispiel 6 (nicht erfindungsgemäß):

Im Unterschied zu Beispiel 5 wurden 100 g der in Beispiel 2 hergestellten Vernetzer-haltigen Masse mit 100 g der in Beispiel 5 hergestellten Platin-haltigen Masse vermischt und 0,14 g Ethinylcyclohexanol hinzugefügt.

### Beispiel 7:

Im Unterschied zu Beispiel 5 wurden 100 g der in Beispiel 3 hergestellten Vernetzer-haltigen Masse mit 100 g der in Beispiel 5 hergestellten Platin-haltigen Masse vermischt und 0,14 g Ethinylcyclohexanol hinzugefügt.

### Beispiel 8 (nicht erfindungsgemäß):

Im Unterschied zu Beispiel 5 wurden 100 g der in Beispiel 4 hergestellten Vernetzer-haltigen Masse mit 100 g der in Beispiel 5 hergestellten Platin-haltigen Masse vermischt und 0,14 g Ethinylcyclohexanol hinzugefügt.

Tabelle 2 zeigt den Einfluss des verwendeten SiH-Vernetzers auf die Topfzeit der Siliconmasse bei Raumtemperatur (25°C). In Tabelle 2 haben dabei *, M^{H}, Q, D, D^{H}, D^{TFP}, M, x, y und z dieselbe Bedeutung wie in Tabelle 1.

| **Beispiel** | **Struktur SiH-Vernetzer** | **Topfzeit der additonsvernetzenden Massen bei Raumtemperatur [Tage]** |
|---|---|---|
| 5 * | M^{H}ₓQ_{y} | <1 |
| 6 * | M^{H}DₓD^{H}_{y}D^{TFP}_{z}M^{H} | 5 |
| 7 | MDₓD^{H}_{y}D^{TFP}_{z}M | >7 |
| 8 * | MDₓD^{H}_{y}M | >7 |

Aus Tabelle 2 ist ersichtlich, dass die Verwendung eines SiH-Vernetzers, der keine M^{H}-Einheiten enthält, eine deutlich längere Topfzeit zur Folge hat.

### Beispiel 9 (nicht erfindungsgemäß):

Die in Beispiel 5 hergestellte additionsvernetzende Masse, die sowohl SiH-Vernetzer und Platin-Katalysator enthält, wurde in einer hydraulischen Presse bei einer Temperatur von 165°C innerhalb von 2 Minuten zu einer Siliconelastomerfolie vernetzt.

### Beispiel 10 (nicht erfindungsgemäß):

Die in Beispiel 6 hergestellte additionsvernetzende Masse, die sowohl SiH-Vernetzer und Platin-Katalysator enthält, wurde in einer hydraulischen Presse bei einer Temperatur von 165°C innerhalb von 2 Minuten zu einer Siliconelastomerfolie vernetzt.

### Beispiel 11:

Die in Beispiel 7 hergestellte additionsvernetzende Masse, die sowohl SiH-Vernetzer und Platin-Katalysator enthält, wurde in einer hydraulischen Presse bei einer Temperatur von 165°C innerhalb von 2 Minuten zu einer Siliconelastomerfolie vernetzt.

### Beispiel 12 (nicht erfindungsgemäß):

Die in Beispiel 8 hergestellte additionsvernetzende Masse, die sowohl SiH-Vernetzer und Platin-Katalysator enthält, wurde in einer hydraulischen Presse bei einer Temperatur von 165°C innerhalb von 2 Minuten zu einer Siliconelastomerfolie vernetzt.

Tabelle 3 zeigt den Einfluss des verwendeten SiH-Vernetzers auf die Mechanik des vernetzten Siliconelastomers. In Tabelle 3 haben dabei *, M^{H}, Q, D, D^{H}, D^{TFP}, M, x, y und z dieselbe Bedeutung wie in Tabelle 1.

| **Beispiel** | **Struktur SiH-Vernetzer** | **Härte [Shore A]** | **Reißfestigkeit [N/mm**^{**2**}**]** | **Reißdehnung [%]** |
|---|---|---|---|---|
| 9 * | M^{H}ₓQ_{y} | 35 | 5,8 | 390 |
| 10 * | M^{H}DₓD^{H}_{y}D^{TFP}_{z}M^{H} | 42 | 6,9 | 450 |
| 11 | MDₓD^{H}_{y}D^{TFP}_{z}M | 44 | 7,1 | 4 6 0 |
| 12 * | MDₓD^{H}_{z}M | 36 | 2,1 | 180 |

Aus Tabelle 3 ist ersichtlich, dass die Verwendung eines SiH-Vernetzers, der Trifluorpropylgruppen und keine MH-Einheiten enthält, die vollständige Vernetzung des Siliconelastomers ermöglicht, so dass sehr gute mechanische Eigenschaften erzielt werden.

### Beispiel 13 (nicht erfindungsgemäß):

Im Unterschied zu Beispiel 3 wurden nur 1,04 g SiH-Vernetzer zu den in Beispiel 1 beschriebenen 100 g Füllstoff enthaltende Siliconmasse hinzugefügt. 100 g dieser Vernetzer enthaltende Masse wurden mit 100 g der in Beispiel 5 hergestellten Platin-haltigen Siliconmasse vermischt, 0,14 g Ethinylcyclohexanol hinzugefügt und wie in Beispiel 9 beschrieben zu einer Siliconelastomerfolie vernetzt.

Tabelle 4 zeigt den Einfluss des SiH/Vinyl-Verhältnisses auf die Mechanik des vernetzten Siliconelastomers. In Tabelle 4 haben dabei *, D, D^{H}, D^{TFP}, M, x, y und z dieselbe Bedeutung wie in Tabelle 1.

| **Beispiel** | **Struktur SiH-Vernetzer** | **SiH / SiVinyl-Verhältnis [Mol/Mol]** | **Härte [Shore A]** |
|---|---|---|---|
| 11 | MDₓD^{H}_{y}D^{TFP}_{z}M | 2 , 3 | 44 |
| 13 * | MDₓD^{H}_{y}D^{TFP}_{z}M | 0, 8 | 15 |

Aus Tabelle 4 ist ersichtlich, dass ein Überschuss an SiH-Gruppen vorhanden sein muss, um eine vollständige Vernetzung der Siliconmasse zu ermöglichen.

Um die Medienbeständigkeit gegenüber unpolaren Medien zu überprüfen, wurden die in Beispiel 9 - 12 hergestellten Siliconelastomere in Heptan und Diesel 24 Stunden bei Raumtemperatur gelagert. Dabei wurden zylinderförmige Formkörper mit einem Durchmesser von 10 mm und einer Dicke von 6 mm verwendet.

Tabelle 5 zeigt den Einfluss des verwendeten SiH-Vernetzers auf die Medienbeständigkeit. In Tabelle 5 haben dabei *, M^{H}, Q, D, D^{H}, D^{TFP}, M, x, y und z dieselbe Bedeutung wie in Tabelle 1.

| **Beispiel** | **Struktur SiH-Vernetzer** | **Volumenquellung [%] nach 24 Stunden bei Raumtemperatur in** | |
|---|---|---|---|
| | | **Heptan** | **Diesel** |
| 9 * | m^{H}ₓQ_{y} | 68 | 15 , 5 |
| 10 * | M^{H}DₓD^{H}_{y}D^{TFP}_{z}M^{H} | 66 | 14,6 |
| 11 | MDₓD^{H}_{y}D^{TFP}_{z}M | 64 | 14,2 |
| 12 * | MDₓD^{H}_{z}M | 68 | 15,8 |

Aus Tabelle 5 ist ersichtlich, dass die Verwendung eines SiH-Vernetzers, der Trifluorpropylgruppen und keine M^{H}-Einheiten enthält, die Medienbeständigkeit verbessert.

### Beispiel 14:

Im Unterschied zu Beispiel 7 wird vor Vermischen der 100 g SiH-Vernetzer-haltigen Masse mit 100 g Platin-haltigen Masse der SiH-Vernetzer-haltigen Masse 0,33 g des in DE 196 34 971 A1 Beispiel 1 beschriebenen Organoschwefel-haltigen Füllstoffs und 0,14 g Ethinylcyclohexanol hinzugefügt. Die Vernetzung erfolgt unter den in Beispiel 9 beschriebenen Bedingungen.

Tabelle 6 zeigt den Einfluss des Schwefel-haltigen Füllstoffs auf den Druckverformungsrest des vernetzten Siliconelastomers.

| **Beispiel** | **Härte [Shore A]** | **Druckverformungsrest [%]** |
|---|---|---|
| 11 | 44 | 55 |
| 14 | 43 | 20 |

Aus Tabelle 6 ist ersichtlich, dass der Zusatz des Schwefel-haltigen Füllstoffs den Druckverformungsrest deutlich verbessert.

### Beispiel 15

Im Unterschied zu Beispiel 14 werden der unvernetzten Siliconmasse noch zusätzlich 4 Gew.-% eines Trimethylsiloxyterminierten Mischpolymerisats, bestehend aus Dimethylsiloxy- und 80 Mol-% Phenylmethylsiloxy -Einheiten, mit einer Viskosität von 60 mPas bei 25°C vor der Vernetzung hinzugefügt. Die Vernetzung erfolgt unter den in Beispiel 9 beschriebenen Bedingungen.

Tabelle 7 zeigt den Einfluss des Schwefel-haltigen Füllstoffs auf den Druckverformungsrest und des Phenyl-haltigen Mischpolymerisats auf das Ausschwitzverhalten.

| **Beispiel** | **Härte [Shore A]** | **Ölfilm auf der Silicone-lastomerfolie nach einem Tag Lagerung bei Raumtemperatur vorhanden** | **Druckverformungsrest [%]** |
|---|---|---|---|
| 11 | 42 | Nein | 53 |
| 15 | 41 | Ja | 19 |

Aus Tabelle 7 ist ersichtlich, dass der Zusatz des Schwefel-haltigen Füllstoffs den Druckverformungsrest deutlich verbessert und der Zusatz des Öls einen Selbstschmiereffekt bewirkt.

Die Charakterisierung der Siliconelastomereigenschaften erfolgten gemäß DIN 53505 (Shore A), DIN 53504-S1 (Reißfestigkeit und Reißdehnung), DIN 53517 (Druckverformungsrest, 22 Stunden bei 175°C). Die Viskosität wurde bei einer Scherrate von 10 s⁻¹ bestimmt.

## Patentansprüche

1. Härtbare Siliconmassen enthaltend
(A) 100 Gewichtsteile zumindest eines Polyorganosiloxans mit einer Viskosität von 500-2.000.000 mPas, das mindestens zwei Reste mit aliphatischen Kohlenstoff-Kohlenstoff-Mehrfachbindungen und mindestens 5 Mol-% 3,3,3-Trifluorpropylmethylsiloxy- oder mindestens 5 Mol-% Bis(3,3,3-Trifluorpropyl)siloxy-Einheiten aufweist,
(B) 0.1-50 Gewichtsteile einer oder mehrerer siliciumorganischer Verbindungen, welche mindestens zwei, bevorzugt mindestens drei an Silicium gebundene Wasserstoffatome pro Molekül enthalten, mindestens 2,5 Mol-% 3,3,3-Trifluorpropylmethylsiloxy- oder mindestens 2,5 Mol-% Bis(3,3,3-Trifluorpropyl)siloxy-Einheiten aufweisen und keine endständigen H-SiRR'-O_{1/2}-Einheiten enthalten und zusätzlich das Verhältnis der an Silicium gebundenen Wasserstoffatome des Vernetzers (B) zur Kohlenstoff-Kohlenstoff-Mehrfachbindung der Polyorganosiloxane (A) mindestens 1,1 : 1 beträgt,
(C) 1 - 90 Gewichtsteile verstärkender Füllstoff mit einer spezifischen Oberfläche von mindestens 50 m²/g und
(D) Hydrosilylierungskatalysator.

2. Härtbare Siliconmassen gemäß Anspruch 1, **dadurch gekennzeichnet, dass** das Kohlenstoff-Kohlenstoff-Mehrfachbindungen enthaltende Polyorganosiloxan (A) dargestellt wird durch die durchschnittliche allgemeine Formel (1)
R¹ₓR²_{y}SiO_{(4-x-y)/2} (1),
worin
**R**^{**1**} unabhängig von einander einwertige, gegebenenfalls halogen- oder cyanosubstituierte, gegebenenfalls über eine organische zweiwertige Gruppe an Silicium gebundene C₁-C₁₀- Kohlenwasserstoffreste, die aliphatische Kohlenstoff-Kohlenstoff-Mehrfachbindungen enthalten,
**R**^{**2**} unabhängig von einander einwertige, gegebenenfalls halogen- oder cyanosubstituierte, über SiC-gebundene C₁₋C₁₀- Kohlenwasserstoffreste, die frei sind von aliphatischen Kohlenstoff-Kohlenstoff Mehrfachbindungen, mit der Maßgabe, dass mindestens 5 Mol-% 3,3,3-Trifluorpropylmethylsiloxy- oder mindestens 5 Mol-% Bis(3,3,3-Trifluorpropyl)siloxy-Einheiten im Polyorganosiloxan (A) enthalten sind,
**x** eine solche nichtnegative Zahl mit der Maßgabe, dass mindestens zwei Reste **R**^{**1**} in jedem Molekül vorhanden sind, und
**y** eine nicht negative Zahl mit der Maßgabe, dass die Summe (x+y) im Bereich von 1,8 bis 2,5 liegt,
bedeuten.

3. Härtbare Siliconmassen gemäß Anspruch 1 oder 2, **dadurch gekennzeichnet, dass** der SiH-Vernetzer (B) eine Organosiliciumverbindung der durchschnittlichen allgemeinen Formel (4)
**H**_{**a**}**R**^{**3**}_{**b**}**SiO**_{**(4-a-b)/2**} (4),
worin
**R**^{**3**} unabhängig von einander einwertige, gegebenenfalls halogen- oder cyanosubstituierte, über SiC-gebundene C₁-C₁₀- Kohlenwasserstoffreste, die frei sind von aliphatischen Kohlenstoff-Kohlenstoff-Mehrfachbindungen, mit der Maßgabe, dass mindestens 2,5 Mol-% 3,3,3-Trifluorpropylmethylsiloxy- oder mindestens 2,5 Mol-% Bis(3,3,3-Trifluorpropyl)siloxy-Einheiten und keine einständigen Reste HR³₂SiO_{1/2-}enthalten sind, und
**a, b** nichtnegative ganze Zahlen sind,
bedeuten mit der Maßgabe, dass 0,5 < **(a+b)** < 3,0, 0 < **a** < 2 und dass mindestens zwei siliciumgebundene Wasserstoffatome pro Molekül vorhanden sind, ist.

4. Härtbare Siliconmassen gemäß einem der Ansprüche 1 bis 3, **dadurch gekennzeichnet, dass** der SiH-Vernetzer (B) eine Organosiliciumverbindung der durchschnittlichen allgemeinen Formel (5)
**(R**^{**4**}_{**3**}**SiO**_{**1/2**}**)**_{**d**}**(HR**^{**4**}**SiO**_{**2/2**}**)**_{**e**}**(R**^{**4**}_{**2**}**SiO**_{**2/2**}**)**_{**f**} (5),
worin
**R**^{**4**} die Bedeutungen von **R**^{**3**} hat und
**d, e,** f nichtnegativen ganzen Zahlen
bedeuten mit der Maßgabe, dass die Gleichungen d = 2, e > 2, 5 < **(e+f)** < 200 und 0,1 < **e/(e +f)** < 1 erfüllt sind, ist.

5. Härtbare Siliconmassen gemäß einem der Ansprüche 1 bis 4, **dadurch gekennzeichnet, dass** der SiH-funktionelle Vernetzer (B) in einer solchen Menge in der härtbaren Siliconmasse enthalten ist, dass das Molverhältnis von SiH-Gruppen zu Kohlenstoff-Kohlenstoff-Mehrfachbindungen 1,1 bis 5 : 1 beträgt.

6. Härtbare Siliconmassen gemäß einem der Ansprüche 1 bis 5, **dadurch gekennzeichnet, dass** der verstärkende Füllstoff (C) ausgewählt wird aus der Gruppe enthaltend gefällte und pyrogene Kieselsäuren sowie Ruß.

7. Härtbare Siliconmassen gemäß einem der Ansprüche 1 bis 6, **dadurch gekennzeichnet, dass** der Hydrosilylierungskatalysator (D) ausgewählt wird aus der Gruppe enthaltend die Metalle Platin, Rhodium, Palladium, Ruthenium und Iridium sowie deren Verbindungen.

8. Härtbare Siliconmassen gemäß einem der Ansprüche 1 bis 7, **dadurch gekennzeichnet, dass** die härtbaren Siliconmassen als weitere Bestandteile 0,0001 bis 70 Gew.-% Bestanteile (E) ausgewählt aus der Gruppe enthaltend harzartige Polyorganosiloxane, die von den Polyorganosiloxanen (A) verschieden sind, Dispergierhilfsmittel, Lösungsmittel, Haftvermittler, Pigmente, Farbstoffe, Weichmacher, organische Polymere, Hohlkugeln, expandierbare Hohlkugeln, Hitzestabilisatoren, Pigmente, hochdisperse Kieselsäure und Thixotropieadditive enthalten.

9. Verfahren zur Herstellung von härtbaren Siliconmassen gemäß den Ansprüchen 1 bis 8, **dadurch gekennzeichnet, dass** zumindest die Bestandteile (A) bis (D) vermischt werden.

10. Verfahren nach Anspruch 9, **dadurch gekennzeichnet, dass** eine Komponente neben (A) und (C) den Hydrosilylierungskatalysator (D) und die zweite Komponente neben (A) und (C) den SiH-Vernetzer (B) enthält.

11. Verwendung der härtbaren Siliconmassen gemäß den Ansprüchen 1 bis 8 zur Herstellung von additionsvernetzenden RTV- und LSR-Massen.

12. Siliconelastomere erhältlich durch Additionsvernetzung einer härtbaren Siliconmasse gemäß einem der Ansprüche 1 bis 8.

13. Verfahren zur Herstellung von Siliconelastomeren gemäß Anspruch 12 durch Compoundierung einer Komponente enthaltend zumindest ein Polyorganosiloxan (A) und zumindest einen Füllstoff (C) mit einer weiteren Komponente enthaltend zumindest einen Vernetzer (B) und den Hydrosilylierungskatalysator (D) mit anschließender Vernetzung.

14. Verfahren zur Herstellung von Siliconelastomeren gemäß Anspruch 13, **dadurch gekennzeichnet, dass** die Vernetzung unter Erwärmung oberhalb der Raumtemperatur erfolgt.

15. Verwendung der Siliconelastomere gemäß Anspruch 12 als Dichtungen.
